# EUROPEAN PATENT SPECIFICATION

(11) **EP 1 146 423 B1**
(45) Date of publication and mention of the grant of the patent: **20.01.2010**
(21) Application number: 01108430.8
(22) Date of filing: 04.04.2001
(51) Int. Cl.: G06F 11/18

(54) **Voted processing system**
Verarbeitungssystem mit Mehrheitsentscheidung
Système de traitement à vote majoritaire

(30) Priority: 11.04.2000 US 546931
(43) Date of publication of application: 17.10.2001
(73) Proprietor: The Boeing Company, Chicago, IL 60606-2016 (US)
(72) Inventor: Kohnen, Kirk, Fullerton, California 92833 (US); Chow, Harry, Walnut, California 91789 (US); Botzong, Bret M., Rancho Palos Verdes, California 90275 (US)
(74) Representative: Steil, Christian

(56) References cited:
- GB-A- 2 093 614
- US-A- 5 572 663
- SMITH S E: "TRIPLE REDUNDANT FAULT TOLERANCE: A HARDWARE-IMPLEMENTED APPROACH" ISA TRANSACTIONS, INSTRUMENT SOCIETY OF AMERICA. PITTSBURGH, US, vol. 30, no. 4, January 1991 (1991-01), pages 87-95, XP000275596 ISSN: 0019-0578
- GUDEA D D ET AL INSTITUTE OF ELECTRICAL AND ELECTRONICS ENGINEERS: "TRIPLE SYNCHRONIZED CONTROLLER FOR SPACECRAFT POWER SUBSYSTEMS" PROCEEDINGS OF THE 25TH INTERSOCIETY ENERGY CONVERSION ENGINEERING CONFERENCE. IECEC-90. RENO, AUG. 12 - 17, 1990, PROCEEDINGS OF THE INTERSOCIETY ENERGY CONVERSION ENGINEERING CONFERENCE, NEW YORK, IEEE, US, vol. VOL. 1 CONF. 25, 12 August 1990 (1990-08-12), pages 257-262, XP000214651

## Description

The present invention relates generally to fault tolerant computer processors, and more particularly, to a voted processing system.

The natural radiation environment on Earth and in space can often cause short term and long term degradation of semiconductor devices used in computers. This hazard is a problem for computers where fault-free operation is required. In addition to these radiation effects, computer chips are subject to random failures due to undetected defects and weaknesses that evolve over the course of time. Trace radioactive materials in semiconductor packages may also cause faults.

When computers must operate for long periods in a remote environment, or where these devices must operate without fault for long periods of time, the need for systems that are protected from faults or failure becomes critical. Remote or vulnerable environments include remote oil platforms, submarines, aircraft and isolated sites such as Antarctica. Systems that operate in Earth orbit and beyond are especially vulnerable to this radiation hazard.

The presence of cosmic rays and particularly high-energy particles in space can produce a disturbance called a single event effect (SEE) or a single event upset (SEU). The magnetic field of the Earth deflects particles. The Earth's magnetic field also traps charged particles that travel from the Sun and other stars toward the Earth. Some particles that are not trapped by the Earth's magnetic field are steered by that field into our atmosphere near the poles. These particles can penetrate the electronic devices aboard satellites.

When high-energy particles and gamma rays penetrate a semiconductor device, they deposit charge within the computer circuit and create transients and/or noise. This phenomenon can "upset" the memory circuits. One type of upset occurs when a single bit of data stored in the chip's memory changes its value due to radiation. In this instance, a logical value of "one" can change to a logical value of "zero" and vice versa. An upset may be generally defined as a misstated output of a component. This output may comprise one or more signal bits.

The upset rate of a component depends on the construction features of the chip, including its size, operating voltage, temperature and internal circuit design. The upset rate for a particular part can vary from ten per day for a commercial one-megabit random access memory chip (RAM), to 1 every 2800 years for a radiation-hardened one megabit RAM. A radiation-hardened component is a device that has been specially designed and built to resist the hazards of radiation. These devices, however, tend to be much more expensive and slower than conventional chips. They typically lag the state-of-the-art by several years.

A solution to this problem is presented in U.S. Patent No. 5,903,717, which discloses a fault tolerant computer system. This approach describes a fault tolerant computer system in which four RISC CPUs are directly attached to voting logic and are operated in lock-step. Such an approach protects the CPUs from the effects of ionizing radiation in space, but it does not protect the peripheral logic (e.g., the Memory Interface and the Bus Interface).

The development of a fault tolerant computer based on commercially available parts for use in military and commercial space vehicles would offer significant operational and cost advantages. Such an invention would offer higher levels of performance and would cost less to manufacture than existing approaches based on radiation hardened chips. The invention could be used for remotely installed computer systems and other processors that are subjected to random failures or to a radiation environment which produces single event upsets at unacceptably high rates. Such radiation upset protection would discover and correct errors. It would be extremely beneficial if a fault tolerance method could be applied not only at the CPU level, but also at the peripheral logic level. Such a system would fill a long felt need in specialized computer and satellite industries.

From GB-A-2093614 a triple redundant microprocessor system is known having three microprocessors, each of which including a memory bus to which is connected a program memory ROM and a data memory RAM which are addressed via an associated address bus. Each microprocessor also includes a data bus which is interconnected to the memory bus by associated majority voting circuits which are also interconnected to the other microprocessor data buses and memory buses. The majority voting circuits function to provide majority voting on the respective microprocessor data bus and memory bus in response to the condition of signals present on the data buses and the memory buses connected thereto.

From US-A-5,572,663 a highly reliable information processor system is known, which takes in the bus cycle start signals which are output to notify outside devices of the timings where the first to third microprocessors start their bus cycles so as to compare them with each other and, detects any malfunction of a microprocessor based on discrepancy in start timing among bus cycles. When it judges that the first microprocessor in execution mode malfunctions, it logically isolates the first microprocessor operating in execution mode and cause either of the second or third microprocessor operating in monitor mode to enter execution mode. After such degradation from triple-processor configuration to double-processor configuration, it executes again the bus cycle which has been executed at the time of malfunction detection.

It is, therefore, an object of the invention to provide an improved and reliable voted processing system. Another object of the invention is to harden the peripheral logic of a processing system against radiation.

This object is achieved by a voted processing circuit according to chaim 1 and a satellite system according to daim 7.

According to the invention, a voted processing system includes at least three processor groupings coupled to a voter. Each processor grouping incudes a central processing unit (CPU) and a support logic device. The CPUs operate synchronously to execute an operating step every clock cycle. Each operating step of each CPU is accomplished in parallel and substantially simultaneously with each other. The support logic devices, such as memory controllers or bus interfaces, are coupled to the CPUs. The voter is coupled to all of the processor groupings. The voter uses redundant voting to detect errors in any one of the professor groupings. An error is detected if a minority of the processor groupings disagrees with a majority of the processor groupings. When an error is detected, the majority of processor groupings are considered the correct output while the remaining processor groupings are reset.

The present invention thus achieves an improved voted processing system. The present invention is advantageous in that it allows the use of commercial, non-radiation hardened components to be used with in a fault sensitive system.

Additional advantages and features of the present invention will become apparent from the description that follows, and may be realized by means of the instrumentalities and combinations particularly pointed out in the appended claims, taken in conjunction with the accompanying drawings.

In order that the invention may be well understood, there will now be described some embodiments thereof, given by way of example, reference being made to the accompanying drawings, in which:
FIGURE 1 depicts a satellite system in which a voted processing circuit in accordance with the present invention may be utilized; and
FIGURE 2 schematically illustrates a voted processing circuit in accordance with one embodiment of the present invention.

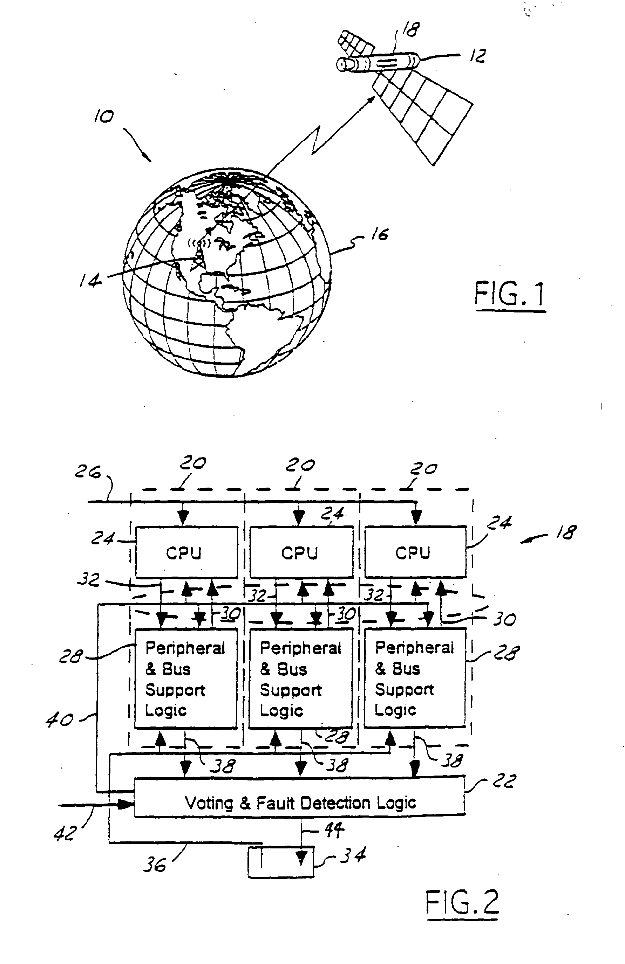

Referring to FIGURE 1, a satellite system 10 in which a voted processing circuit in accordance with the present invention might be utilized is illustrated. The satellite system 10 is comprised of one or more satellites 12 in communication with a ground station 14 located on the Earth 16. Each satellite 12 contains one or more voted processing circuits 18.

The satellite system 10 is responsible for insuring correct processor operation while being subjected to radiation. Integrated circuits used in computers and other electronic systems aboard space vehicles are susceptible to a phenomenon known as Single Event Upset, or SEU. Single Event Upset occurs when radiation passing through an integrated circuit deposits stray charges in the device, causing one of its registers to be disrupted. Several fault protection techniques can be utilized to reduce the number of SEU's that occur in the integrated circuits used aboard space vehicles, but these conventional techniques have several disadvantages.

Referring to FIGURE 2, a schematic of a voted processing circuit 18 in accordance with one embodiment of the present invention is illustrated. Voted processing circuit 18 includes three or more processor groupings 20 coupled to a voter 22. Each processor grouping 20 includes a central processing unit 24 and a support logic device 28 and has a plurality of processor grouping inputs and outputs. In one preferred embodiment of the present invention, three processor groupings 20 are used, however, one skilled in the are would recognize that any number of processor groupings greater then three may be used.

A voted processing circuit 18 includes three processor groupings 20 and three CPUs 24. One CPU corresponding to each processor grouping 20 is required. Each CPU 24 receives a clock signal 26 and executes an operating step during a clock cycle of clock signal 26. Each CPU 24 operates synchronously, each operating step of each CPU 24 being accomplished in parallel and substantially simultaneously with each other CPU 24 for each clock cycle. Each CPU 24 includes a plurality of CPU inputs coupled to support logic device 28 through line 30 and a plurality of CPU outputs coupled to support logic device 28 through line 32.

In a voted processing circuit 18 containing three processor groupings 20, three support logic devices 28, one corresponding to each processor grouping 20, are required. One skilled in the art would recognize that support logic device 28 may include any type of peripheral or bus support logic component. These components may include a memory system, a memory controller, a system memory, or a bus interface controller. Each support logic device 28 includes a plurality of support logic device inputs coupled to CPU 24 through line 32 and a system bus 34 through line 36. Each support logic device also includes a plurality of support logic device outputs coupled to CPU 24 through line 30 and voter 22 through line 38.

Voter 22 is coupled to each processor grouping 20 through line 38 and is responsible for detecting output errors and resetting each processor grouping 20. Voter 22 uses redundant voting of the processor grouping outputs. An error is detected if a minority of the processor grouping outputs disagrees with a majority of the processor grouping outputs. In the present example, when three processor groups 20 are used, one is a minority. Each processor grouping output is compared one with another by voter 22 each clock cycle. Each voter 22 includes a plurality of voter inputs coupled to support logic device 28 through line 38 and a plurality of voter outputs coupled to system bus 34 through line 44.

When voted processing circuit 18 is reset through reset input 42, all of the CPUs 24 and all of the support logic devices 28 are set substantially to the same state. When voted processing circuit 18 starts running, each individual processor grouping 20 runs in lock step with all the other processor groupings 20. Typically, all processor groupings 20 will agree on any outputs that they generate (this is the non-fault state of voted processing circuit 18). In the event that one processor grouping 20 generates a signal that is in disagreement with the other signals, voter 22 initiates a recovery process.

In the recovery process, the processor grouping 20 with the error is immediately reset through line 40. This puts it back into a known state. The remaining processor groupings are interrupted by voter 22 indicating that a fault has occurred. When interrupted, the remaining processor groupings 20 start saving any vital state information into main system memory. Upon completion of this interrupt process, the fault detection logic resets all processor groupings 20 through line 40, whereupon they start executing code again from a state defined operating step with minimal disruption.

Typically, when a processor grouping error occurs, the present invention will successfully save vital information, resynchronize the processor groupings 20 and resume normal execution of code. However, this is not always the case. It is possible for upsets to occur while voted processing circuit 20 is attempting to recover from a previous error. While the recovery interrupt is being processed, voter 22 continues to monitor the outputs of the remaining processor groupings 20. Should voter 22 detect further disagreements such that a majority of the remaining processor groupings 20 are not known to be in complete agreement, it will declare a fatal error and immediately reset all processor groupings 20 through line 40. Once processor groupings 20 have all been reset, voted processing circuit 18 will start executing code from a hardware defined operating step.

The present invention thus achieves an improved system for preventing single event upset induced errors by incorporating the processor support logic before voter 20. While voter logic is susceptible to SEU induced errors, the number of transistors involved in the voter logic is far smaller than the number of peripheral logic transistors. Therefore, system exposure to SEUs is greatly reduced and consequent system reliability is increased. Without the invention, satellite system 10 will require ground intervention about once every thirty years. The majority of this is due to errors in processor support logic. With the present invention, satellite system 10 will require ground intervention about once every one hundred twenty years, resulting in a four-fold improvement.

From the foregoing, it can be seen that there has been brought to the art a new and improved voted processing system. It is to be understood that the preceding description of the preferred embodiment is merely illustrative of some of the many specific embodiments that represent applications of the principles of the present invention. Clearly, numerous and other arrangements would be evident to those skilled in the art without departing from the scope of the invention as defined by the following claims:

## Claims

1. A voted processing circuit (18) comprising:
at least three processor groupings (20) each of said at least three processor groupings (20) having a plurality of processor grouping inputs (36) and a plurality of processor grouping outputs (38), said at least three processor groupings (20) comprising:
- at least three central processing units (CPUs) (24), each CPU (24) corresponding to one of said at least three processor groupings (20), each of said at least three CPUs (24) having an operating step executed during a clock cycle, said at least three CPUs (24) operating synchronously, each operating step of each CPU (24) being accomplished in parallel and substantially simultaneously with each of the other of the at least three CPUs (24) each clock cycle, each of said at least three CPUs (24) having a plurality of CPU inputs (30) and a plurality of CPU outputs (32); and
- at least three support logic devices (28), each support logic device (28) coupled to said plurality of CPU inputs (30) and said plurality of CPU outputs (32) of one of said at least three CPUs (24), each of said at least three support logic devices (28) having a plurality of support logic device inputs (32) coupled to said plurality of CPU outputs (32) and a plurality of support logic device outputs (30) coupled to said plurality of CPU inputs (30); and
a voter (22) coupled to said plurality of processor grouping outputs (38), said voter (22) using redundant voting of said plurality of processor grouping outputs (38) to detect errors in any one of said plurality of processor grouping outputs (38), whereby an error is detected if one of said processor grouping outputs (38) disagrees with a majority of said plurality of processor grouping outputs (38) of said at least three processor groupings (20), each of said plurality of processor grouping outputs (38) being compared one with another by said voter (22) each said clock cycle, said voter having a plurality of voter outputs (44),
**characterized in that**
said voter (22), when one of said processor groupings (20) has an error, immediately resets the processor grouping (20) with an error and interrupts the remaining processor groupings (20) without an error, wherein the remaining processor groupings (20) without an error store state information, and said voter (22) continues comparing the outputs (38) of the remaining processor groupings (20) without an error, said voter (22) resetting said at least three processor groupings (20) after said state information is stored to restart said at least three processor groupings (20) at a state defined operating step.

2. The circuit of claim 1, **characterized in that** said voter (22) resets each of said at least three processor groupings (20) during a fatal error, whereby said at least three processor groupings (20) restart at a hardware defined operating step after being reset.

3. The circuit of any of claims 1 or 2, **characterized in that** said voter (22) includes a reset input (42), whereby said voter (22) resets said at least three processor groupings (20) when said reset input (42) is activated.

4. The circuit of any of claims 1-3, **characterized in that** each of said at least three support logic devices (28) includes a memory system.

5. The circuit of any of claims 1-4, **characterized by** a system bus (34) coupled to each of said plurality of processor grouping inputs (36) and said plurality of voter outputs (44).

6. The circuit of claim 5, **characterized in that** each of said at least three support logic devices (28) includes a bus interface controller coupled to said system bus (34).

7. A satellite system (10) comprising:
a ground station (14);
a satellite (12) in orbit and in communication with said ground station (14), said satellite (12) having a voted processing circuit (18) according to any of claims 1-6, wherein
a system bus (34) is coupled to each of said plurality of processor grouping inputs (36) and said plurality of voter outputs (44).

## Patentansprüche

1. Verarbeitungsschaltung (18) mit Mehrheitsauswahl mit:
wenigstens drei Prozessorgruppierungen (20), wobei jede der wenigstens drei Prozessorgruppierungen (20) eine Mehrzahl von Prozessorgruppierungseingängen (36) und eine Mehrzahl von Prozessorgruppierungsausgängen aufweist, wobei die wenigstens drei Prozessorgruppierungen (20) beinhalten:
- wenigstens drei zentrale Verarbeitungseinheiten (CPU) (24), wobei jede der zentralen Verarbeitungseinheiten (24) einer der wenigstens drei Prozessorgruppierungen (20) entsprechend zugeordnet ist, wobei jede der wenigstens drei zentralen Verarbeitungseinheiten (24) einen Arbeitsschritt während eines Taktzyklus ausführt, wobei die wenigstens drei zentralen Verarbeitungseinheiten (24) synchron arbeiten, wobei jeder Arbeitsschritt jeder der zentralen Verarbeitungseinheiten (24) parallel und im Wesentlichen gleichzeitig mit jeder der anderen der wenigstens drei zentralen Verarbeitungseinheiten (24) ausgeführt wird, und zwar jeden Taktzyklus, wobei jede der wenigstens drei zentralen Verarbeitungseinheiten (24) eine Mehrzahl von Verarbeitungseinheitseingängen (30) und eine Mehrzahl von Verarbeitungseinheitsausgängen (32) aufweist; und
- wenigstens drei Unterstützungslogikbauelemente (28), wobei jedes der Unterstützungslogikbauelemente (28) mit der Mehrzahl von Verarbeitungseinheitseingängen (30) und der Mehrzahl von Verarbeitungseinheitsausgängen (32) von einer der wenigstens drei zentralen Verarbeitungseinheiten (24) verbunden ist, wobei jedes der wenigstens drei Unterstützungslogikbauelemente (28) eine Mehrzahl von Unterstützungslogikbauelementeingängen (32) aufweist, die verbunden sind mit der Mehrzahl von Verarbeitungseinheitsausgängen (32), und eine Mehrzahl von Unterstützungslogikbauelementausgängen (30) aufweist, die mit der Mehrzahl von Verarbeitungseinheitseingängen (30) verbunden sind; und
wobei eine Auswahleinheit (22) mit der Mehrzahl von Prozessorgruppierungsausgängen (38) verbunden ist, wobei die Auswahleinheit (22) eine redundante Mehrheitsauswahl der Mehrzahl von Prozessorgruppierungsausgängen (38) verwendet, um Fehler in jedem der Mehrzahl von Prozessorgruppierungsausgängen (38) zu erfassen, wodurch ein Fehler erfasst wird, sofern einer der Prozessorgruppierungsausgänge (38) mit einer Mehrheit der Mehrzahl von Prozessorgruppierungsausgängen (38) der wenigstens drei Prozessorgruppierungen (20) nicht übereinstimmt, wobei jeder der Mehrzahl von Prozessorgruppierungsausgängen (38) mit einem anderen verglichen wird, und zwar durch die Auswahleinheit (22) in jedem der Taktzyklen, wobei die Auswahleinheit eine Mehrzahl von Auswahleinheitsausgängen (44) aufweist,
**dadurch gekennzeichnet, dass**
die Auswahleinheit (22) dann, wenn eine der Prozessorgruppierungen (20) einen Fehler aufweist, sofort die Prozessorgruppierung (20) mit einem Fehler zurücksetzt und die übrigen Prozessorgruppierungen (20) ohne einen Fehler unterbricht, wobei die übrigen Prozessorgruppierungen (20) ohne einen Fehler Zustandsinformation speichern, und die Auswahleinheit (22) fortfährt, die Ausgänge (38) der übrigen Prozessorgruppierungen (20) ohne einen Fehler zu vergleichen, wobei die Auswahleinheit (22) die wenigstens drei Prozessorgruppierungen (20) zurücksetzt, nachdem die Zustandsinformation gespeichert ist, um die wenigstens drei Prozessorgruppierungen (20) bei einem zustandsdefinierten Arbeitsschritt neu zu starten.

2. Schaltung nach Anspruch 1, **dadurch gekennzeichnet, dass** die Auswahleinheit (22) jede der wenigstens drei Prozessorgruppierungen (20) während eines schweren Fehlers zurücksetzt, wodurch die wenigstens drei Prozessorgruppierungen (20) bei einem Hardware-definierten Arbeitsschritt neu starten, nachdem sie zurückgesetzt wurden.

3. Schaltung nach Anspruch 1 oder 2, **dadurch gekennzeichnet, dass** die Auswahleinheit (22) einen Reseteingang (42) aufweist, womit die Auswahleinheit (22) die wenigstens drei Prozessorgruppierungen (20) zurücksetzt, wenn der Reseteingang (42) aktiviert wird.

4. Schaltung nach einem der Ansprüche 1 - 3, **dadurch gekennzeichnet, dass** jeder der wenigstens drei Unterstützungslogikbauelemente (28) ein Speichersystem aufweist.

5. Schaltung nach einem der Ansprüche 1 - 4, **gekennzeichnet durch** einen Systembus (34), der mit jedem der Mehrzahl von Prozessorgruppierungseingängen (36) und jedem der Mehrzahl von Mehrheitsgatterausgängen (44) verbunden ist.

6. Schaltung nach Anspruch 5, **dadurch gekennzeichnet, dass** jedes der wenigstens drei Unterstützungslogikbauelemente (28) einen Busschnittstellencontroller aufweist, der mit dem Systembus (34) verbunden ist.

7. Satellitensystem (10) mit:
einer Bodenstation (14);
einem Satelliten (12), der sich im Orbit befindet und mit der Bodenstation (14) in Verbindung steht, wobei der Satellit (12) eine ausgewählte Verarbeitungsschaltung (18) nach einem der Ansprüche 1 - 6 aufweist, wobei
ein Systembus (34) mit jedem der Mehrzahl von Prozessorgruppierungseingängen (36) und der Mehrzahl von Mehrheitsgatterausgängen (44) verbunden ist.

## Revendications

1. Circuit de traitement voté (18) comprenant :
au moins trois groupements de processeurs (20) chacun desdits au moins trois groupements de processeurs (20) ayant une pluralité d'entrées de groupement de processeurs (36) et une pluralité de sorties de groupement de processeurs (38), lesdits au moins trois groupements de processeurs (20) comprenant :
- au moins trois unités centrales de traitement (CPU) (24), chaque CPU (24) correspondant à un desdits au moins trois groupements de processeurs (20), chacune desdites au moins trois CPU (24) ayant une étape d'exploitation exécutée pendant un cycle d'horloge, lesdites au moins trois CPU (24) fonctionnant de façon synchrone, chaque étape d'exploitation de chaque CPU (24) étant accomplie en parallèle et sensiblement simultanément avec chaque autre des au moins trois CPU (24) chaque cycle d'horloge, chacune desdites au moins trois CPU (24) ayant une pluralité d'entrées de CPU (30) et une pluralité de sorties de CPU (32) ; et
- au moins trois dispositifs logiques de support (28), chaque dispositif logique de support (28) couplé à ladite pluralité d'entrées de CPU (30) et à ladite pluralité de sorties de CPU (32) d'une desdites au moins trois CPU (24), chacun desdits au moins trois dispositifs logiques de support (28) ayant une pluralité d'entrées de dispositif logique de support (32) couplée à ladite pluralité de sorties de CPU (32) et une pluralité de sorties de dispositif logique de support (30) couplée à ladite pluralité d'entrées de CPU (30) ; et
un voteur (22) couplé à ladite pluralité de sorties de groupement de processeurs (38), ledit voteur (22) utilisant le vote redondant de ladite pluralité de sorties de groupement de processeurs (38) pour détecter des erreurs dans l'une quelconque de ladite pluralité de sorties de groupement de processeurs (38),
une erreur étant détectée si une desdites sorties de groupement de processeurs (38) est en désaccord avec une majorité de ladite pluralité de sorties de groupement de processeurs (38) desdits au moins trois groupements de processeurs (20), chacune de ladite pluralité de sorties de groupement de processeurs (38) étant comparée les unes avec les autres par ledit voteur (22) chaque cycle d'horloge, ledit voteur ayant une pluralité de sorties de voteur (44),
**caractérisé en ce que** ledit voteur (22), lorsqu'un desdits groupements de processeurs (20) a une erreur, réinitialise immédiatement le groupement de processeurs (20) avec une erreur et interrompt les groupements de processeurs restants (20) sans erreur, dans lequel les groupements de processeurs restants (20) sans erreur stockent des informations d'état, et ledit voteur (22) continue à comparer les sorties (38) des groupements de processeurs restants (20) sans erreur, ledit voteur (22) réinitialisant lesdits au moins trois groupements de processeurs (20) après que lesdites informations d'état sont stockées pour redémarrer lesdits au moins trois groupements de processeurs (20) à une étape d'exploitation définie par état.

2. Circuit selon la revendication 1, **caractérisé en ce que** ledit voteur (22) réinitialise chacun desdits au moins trois groupements de processeurs (20) pendant une erreur fatale, lesdits au moins trois groupements de processeurs (20) redémarrant à une étape d'exploitation définie par matériel après avoir été réinitialisés.

3. Circuit selon l'une quelconque des revendications 1 ou 2, **caractérisé en ce que** ledit voteur (22) inclut une entrée de réinitialisation (42), ledit voteur (22) réinitialisant lesdits au moins trois groupements de processeurs (20) lorsque ladite entrée de réinitialisation (42) est activée.

4. Circuit selon l'une quelconque des revendications 1 à 3, **caractérisé en ce que** lesdits au moins trois dispositifs logiques de support (28) incluent un système de mémoire.

5. Circuit selon l'une quelconque des revendications 1 à 4, **caractérisé par** un bus système (34) couplé à chacune de ladite pluralité d'entrées de groupement de processeurs (36) et à ladite pluralité de sorties de voteur (44).

6. Circuit selon la revendication 5, **caractérisé en ce que** chacun desdits au moins trois dispositifs logiques de support (28) inclut un contrôleur d'interface de bus couplé audit bus système (34).

7. Système satellite (10) comprenant :
une station au sol (14) ;
un satellite (12) en orbite et en communication avec ladite station au sol (14), ledit satellite (12) ayant un circuit de traitement voté (18) selon l'une quelconque des revendications 1 à 6, dans lequel
un bus système (34) est couplé à chacune de ladite pluralité d'entrées de groupement de processeurs (36) et à ladite pluralité de sorties de voteur (44).
